(19) **Europäisches Patentamt**
**European Patent Office**
**Office européen des brevets**

(11) **EP 2 492 076 B1**

(12) **EUROPEAN PATENT SPECIFICATION**

(45) Date of publication and mention
of the grant of the patent:
**20.04.2016 Bulletin 2016/16**

(51) Int Cl.:
***B29C 35/02*** *(2006.01)*     ***B29C 70/44*** *(2006.01)*
***B29L 31/30*** *(2006.01)*     ***B01J 3/04*** *(2006.01)*

(21) Application number: **12155488.5**

(22) Date of filing: **15.02.2012**

(54) **Low volume autoclave having configurable shape**

Niedervolumenautoklav mit konfigurierbarer Form

Autoclave à faible volume ayant une forme configurable

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2011 US 201113035932**

(43) Date of publication of application:
**29.08.2012 Bulletin 2012/35**

(73) Proprietor: **The Boeing Company
Chicago, IL 60606-1596 (US)**

(72) Inventors:
• **Barmichev, Sergey
Bothell, WA Washington 98011 (US)**
• **Retz, Kevin Matthew
Bothell, WA Washington 98011 (US)**

(74) Representative: **Witte, Weller & Partner
Patentanwälte mbB
Postfach 10 54 62
70047 Stuttgart (DE)**

(56) References cited:
**WO-A1-2008/154602**     **DE-C1- 19 529 508**
**US-A1- 2007 080 481**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure generally relates to autoclaves, and deals more particularly with a low volume autoclave having a configurable shape adapted to process differently shaped parts.

BACKGROUND

Autoclaves are commonly used in a variety of industries to apply heat and pressure to parts or other objects. For example, in the aircraft industry, an autoclave may be used to cure fiber reinforced composite parts. Autoclaves are typically cylindrically shaped, insulated steal tanks that are sized to accommodate the largest part that is expected to be processed. As the size of the autoclave increases, particularly in diameter, the cost of manufacturing the autoclave may increase substantially, thus creating a practical limitation on the manufactured size of the autoclaves. In some applications, the autoclave may be larger than is required to process a particular part or group of parts, resulting in unused internal space in the autoclave. This unused space may add to operating costs since more-than-required time and energy are required to heat up and pressurize the autoclave, compared to that for an autoclave that is "right-sized" for the part.

WO 2008/154602 A1 describes an autoclave and a method of using the autoclave. The autoclave includes an elongated pressure vessel that is sealed on both ends and has a circumferential joint between a first portion and a second portion. The portions define an interior configured for accepting an elongated part. The joint is configured to create an angle between the portions. The joint further creates an opening that facilitates an insertion of the part into the interior of the autoclave.

Accordingly, it is an object of the invention to provide an autoclave having a size and shape that can be tailored to substantially match that of the part to be processed, thereby minimizing the containment volume in order to reduce capital and/or operating costs while increasing processing efficiency. Additionally, it is also an object to provide a low volume autoclave that can be configured to match elongated parts of arbitrary shapes with portions particularly adapted to suit the particular part.

SUMMARY

This problem is solved by an autoclave and a respective method according to the independent claims.

The disclosed embodiments preferably comprise a low volume autoclave having a configurable shape, and a related method of autoclaving parts. The disclosed autoclave allows curing of any arbitrary shape part or a family of irregularly shaped parts by configuring the shape of the autoclave to that of the part.

The amount of energy required to cure a given part is minimized by tailoring the autoclave to the size of the part, thereby allowing as small of a containment in the autoclave as possible. The apparatus also provides a method of manufacturing the autoclave using a minimum amount of material, thereby reducing the weight and/or cost of the autoclave.

An autoclave may include an elongated pressure vessel that is sealed on both ends and has a circumferential joint between a first portion and a second portion. The autoclave further includes the portions defining an interior configured for accepting an elongated part, the joint being configured to create an angle between the portions and further creating an opening with a seal, the opening facilitating an insertion of the part into the interior, and the seal enabling pressurization of the interior.

In another example, a low volume autoclave may include a pressure vessel having a joint between a first portion and a second portion, the first portion and the second portion each defining a portion of an internal cavity for accepting a part, the joint creating an angle between longitudinal axes of the first portion and the second portion, the joint having a seal to facilitate increased pressure and heat within the pressure vessel in a closed position. In addition, the autoclave may include a transport system for movably opening and closing the pressure vessel by separating the first portion from the second portion at the joint, the transport system configured to insert and remove the part from the cavity.

According to one disclosed embodiment, an autoclave is provided for processing differently shaped, elongate parts. The autoclave preferably comprises first and second autoclave portions axially rotatable relative to each other, and a locking mechanism for locking the first and second portions together in any of a plurality of axial rotational positions. At least one of the first and second portions include first and second cylindrical bases and a curved central axis extending between the centers of the basis, wherein the first base has a diameter larger than that of the second base. The center of the first base may be laterally offset from the center of the second base along a line extending through the center of and substantially perpendicular to the first base. The first and second bases may respectively lie in first and second, differing planes.

According to still another embodiment, an autoclave is provided preferably having a configurable internal volume for processing any of a plurality of differently shaped parts. The autoclave preferably comprises a plurality of autoclave portions respectively having differing internal volume shapes, and a joint between at least certain ones of the autoclave portions allowing the adjacent portions to rotate relative to each other. The joint includes a locking mechanism for locking the first and second portions together in any of a plurality of axial rotational positions. The autoclave may further comprise a brace coupled between certain of the autoclave portions for securing the autoclave portions against movement relative to each other when the autoclave is pressurized.

According to a further embodiment, a method is provided of autoclaving differently shaped parts preferably comprising configuring the shape of the autoclave to accommodate the parts by rotating differently shaped portions of the autoclave relative to each other. The method may further comprise opening the autoclave to receive a part by separating at least certain of the autoclave portions, placing the part into the open autoclave, closing the autoclave by joining the separated autoclave portions, and locking one or more of the portions into a desired rotational relationship.

The features, functions, and advantages can be achieved independently in various embodiments of the present disclosure or may be combined in yet other embodiments.

BRIEF DESCRIPTION OF THE ILLUSTRATIONS

FIG. 1A is an illustration of a partial cross sectional view of an object inside a low volume autoclave having a configurable shape.

FIG. 1B is an illustration of a partial cross sectional view of the shape low volume autoclave in comparison to the cross sectional view of an existing autoclave.

FIGS. 2A and 2B are illustrations of isometric and elevational views of a low volume autoclave, specifically, FIG. 2A is a top view of an autoclave configured for curing an aircraft wing with a large sweep angle and FIG. 2B is a front view of the autoclave in FIG. 2A.

FIGS. 3A and 3B illustrations of isometric and elevational views of the low volume autoclave in a second position, specifically, FIG. 3A is a top view of an autoclave configured for curing an aircraft wing with a small sweep angle and FIG. 3B is a side view of the autoclave in FIG. 3A.

FIG. 4 is an illustration of a side elevation view of a shape low volume autoclave, including carts, tools and tracks for positioning a part within the autoclave.

FIG. 5 is an illustration of an exploded isometric view of an exemplary locking mechanism for a shape low volume autoclave.

FIG. 6 is an illustration of an isometric view of an exemplary cylindrical insert for a low volume autoclave.

FIG. 7 is an illustration of a perspective view of a low volume autoclave in accordance with one embodiment of the disclosure, the autoclave having a configurable shape in relation to a tooling envelope indicated in broken lines.

FIG. 8 is an illustration of a perspective view of one of the joints between portions of the autoclave shown in FIG. 7.

FIG. 9 is an illustration of the autoclave shown in FIG. 7 following reconfiguration of the portions to accommodate a differently shaped tooling envelope.

FIGS. 10-15 are illustrations of isometric views of different shapes of configurable portions of an autoclave.

FIG. 16 is an illustration of a typical portion of the low volume autoclave.

FIG. 17 is a graphical plot of the radius of the autoclave portion shown in FIG. 16, measured along the central axis between opposite bases of the portion.

FIG. 18 is an illustration of a perspective view of another embodiment of a low volume configurable autoclave in relation to a tooling envelope suitable for processing an aircraft part.

FIG. 19 is an illustration of an isometric view of a low volume configurable autoclave and related tooling envelope suitable for processing aircraft wings.

FIG. 20 is an illustration of an isometric view of another embodiment of the low volume configurable autoclave and related tooling envelope suitable for processing another shape of an aircraft wing.

FIG. 21 an illustration of an isometric view of the autoclave portion of FIG. 16, showing how the autoclave portion may be fabricated.

FIG. 22 is an illustration of a flow diagram of a method of autoclaving differently shaped parts using a low volume, configurable autoclave.

FIG. 23 is an illustration of a flow diagram of aircraft production and service methodology.

FIG. 24 is an illustration of a block diagram of an aircraft.

DETAILED DESCRIPTION

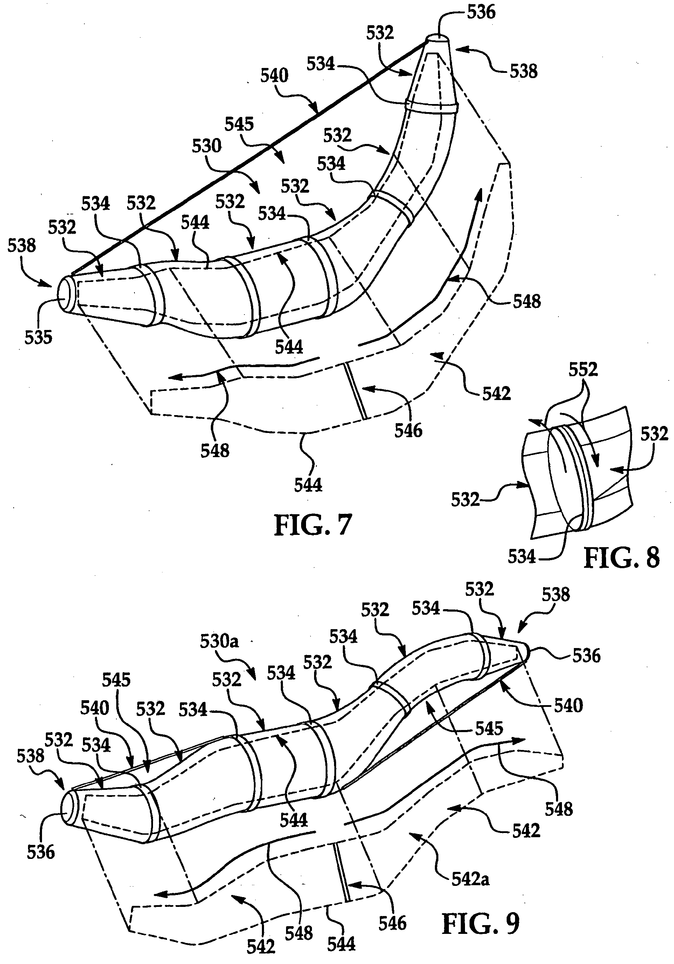

Apparatus and techniques for providing a low volume autoclave having a configurable shape are described herein. Many specific details of certain embodiments of the disclosure are set forth in the following description and in FIGS. 7 through 24 to provide a thorough understanding of such embodiments. One skilled in the art, however, will understand that the present disclosure may have additional embodiments, or that the present disclosure may be practiced without several of the details described in the following description. In the present discussion, it is understood that the term "fiber-reinforced composite material" or "reinforced composite material" includes various non-homogeneous polymer-based and non-polymeric based materials, commonly referred to as "reinforced composites", "carbon-fiber composites", or still other terms known in the art.

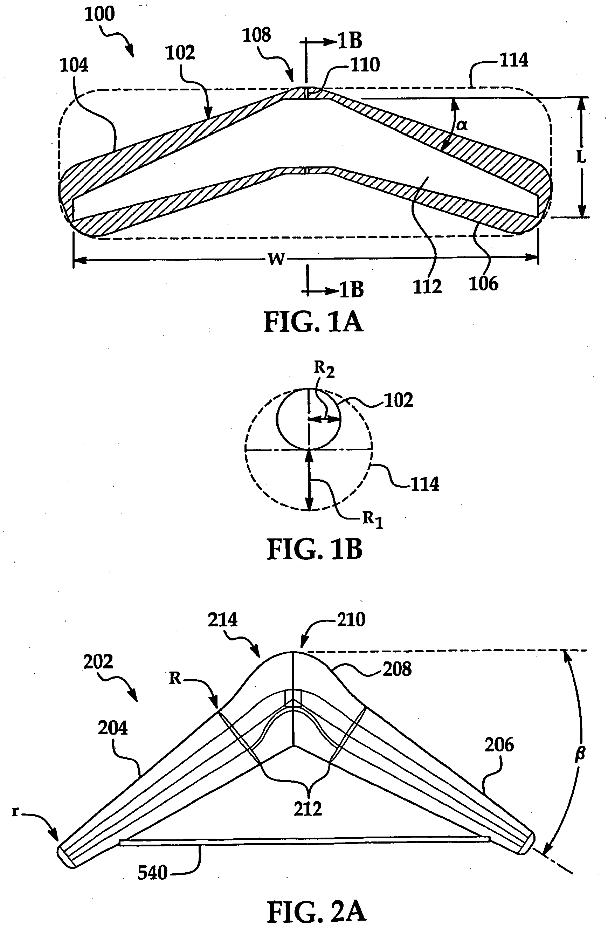

FIG. 1A is a partial cross sectional view of an object inside a low volume autoclave having a configurable shape. In environment 100, a low volume autoclave having a configurable shape 102 includes a first portion 104 offset from an angled second portion 106. A joining portion 108 may be included between the first portion 104 and the second portion 106. Further, the joining portion 108 may include a joint 110 that allows the low volume autoclave 102 to open, thus exposing the interior of the autoclave 102.

The environment 100 also includes a part 112 that may be relatively large (*e.g.*, an aircraft wing). In some embodiments, the part 112 may include complex geometries. For example, the part 112 may be a single piece aircraft wing with a sweep and/or dihedral angle $\alpha$. The part 112 may have a width W and a length L. For example, an aircraft wing may have the width W of approximately 60,96 m [200 feet] and the length L of approximately 24,38 m [80 feet]. In-some aspects, the part 112 may be formed of a fiber-reinforced composite material that requires a curing process performed within the autoclave 102. Therefore, the part 112 may be placed inside of the low volume autoclave 102.

An existing (or prior art) autoclave 114 (represented by dashed lines) formed in a substantially cylindrical shape is represented around the low volume autoclave 102 for comparison purposes. It will be appreciated that the volume of the prior art autoclave 114 is much greater than the volume of the low volume autoclave 102.

FIG. 1B is a partial cross sectional view of the low volume autoclave 102 in comparison to the cross sectional view of the existing autoclave 114. The existing autoclave 114 has a radius $R_1$ while the low volume autoclave 102 has a radius $R_2$. As shown in FIG. 1B, the cross-sectional area of the low volume autoclave 102 is significantly less than the cross-sectional area of the existing autoclave 114 by a degree of squares, as derived from Equation 1 below. For example, in a particular embodiment, if the existing autoclave has a diameter of 24,38 m [80 feet] ($R_1 \approx 12,19$ m [40 ft]) to accommodate the part 112, the low volume autoclave 102 may have a diameter of about 12,19 m [40 feet] ($R_2 \approx 6,1$ m [20 ft]) because the angled second portion 106 in connection to the first portion 104 permits a reduced volume to enclose the part 112. As deduced from Equation 1, both the surface area and volume of the low volume autoclave 102 is about a fourth of the surface area and volume, respectively, of the existing autoclave 114.

$$Vol = \pi \cdot R^2 \cdot h \qquad\qquad \text{Eq. 1}$$

As the sweep and/or dihedral angle a of the non-linear part 112 increases, the radius $R_1$ of an existing autoclave 114 increases with respect to the radius $R_2$. In turn, the volume derived from $R_1$ increases in proportion to the radius (or diameter) squared. Therefore, the low volume autoclave 102 creates a substantially greater savings in internal volume (minimizes excess/unused internal volume) as compared to the existing autoclave 114 which would be necessary to contain the part 112.

As discussed above, the existing autoclave 114 with an internal volume large enough to contain the part 112 may be very expensive to build, if not prohibitively difficult due to structural constraints and large amounts of materials that may be required to erect the autoclave. Further, the volume of an autoclave relates to the per cycle cost to operate the autoclave for curing the part 112 or other operations. Thus, it is advantageous to reduce the volume of the autoclave from at least a capital investment and a per cycle operation cost perspective.

In an exemplary process, the low volume autoclave 102 is opened at the joint 110 between the first portion 104 and the second portion 106. The first and second portions 104, 106 are separated to expose an interior configured for accepting an elongated part. The- joint 110 may be configured to create the angle $\alpha$ between the portions and further create an opening with a seal. In some instances, the joining portion 108 may be replaced or reconfigured to create a different angle $\alpha$ between the first and second portions 104, 106. The opening may facilitate an insertion of the part 112 into the interior. The part 112 may be loaded into at least the first portion 104. The low volume autoclave 102 may then be closed by moving the first and second portions toward each other into a mating position where the seal may enable pressurization of the interior. In some instances, the closing process may include inserting the part 112 into the second portion 106.

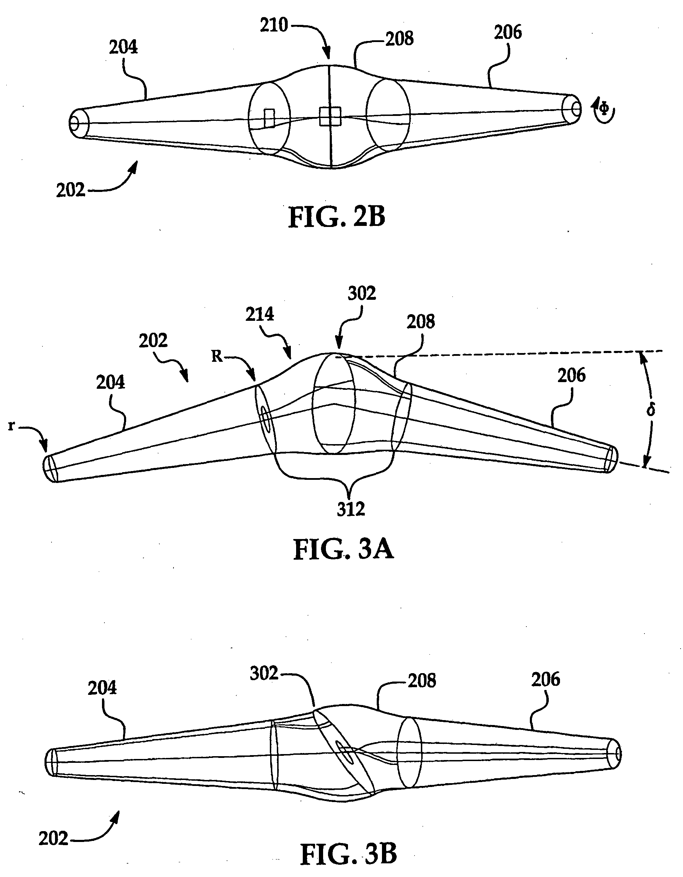

Figures 2A and 2B are isometric views of a low volume autoclave. Figure 2A is a top view of an autoclave configured for curing an aircraft wing with a sweep angle $\beta$, and Figure 2B is a front view of the autoclave in Figure 2A. Figure 2A illustrates an approximately conical (or biconical) autoclave 202 having a low volume. The conical autoclave 202 includes a first conical portion 204 and a second conical portion 206. A joining portion 208 is situated between the first and second conical portion 204, 206. The joining portion may further include a joint 210 that allows the conical autoclave 202 to open, thus exposing the interior of the autoclave.

The volume of the conical autoclave 202 can be approximately determined by Equation 2 for a frustum, or partial cone, having a large radius $R$ and a smaller radius $r$. For some parts, such as the part 112, a frustum volume may completely enclose the part and reduce excess volume, while maintaining enough internal volume around the part to properly cure it during a curing process. For example, a specified airflow is typically desired around the part 112 situated within the conical autoclave to maintain consistent temperatures across the part during the curing process. Both intuitively, and through example calculations comparing Equation 1 and Equation 2, when r < R, the volume of the frustum portions shown in Figures 2a and 2b are less than the volume of a cylinder, as used in the previously-described autoclave 102 (FIG. 1A and 1B). Therefore, the conical autoclave 202 may have a smaller volume than the cylindrical low volume autoclave 102.

$$Vol = \frac{1}{3}\pi \cdot h \cdot (R^2 + Rr + r^2) \qquad \text{Eq. 2}$$

In further aspects, other geometries that reduce the internal volume of the autoclave may be employed while permitting the part 112 to be contained within the autoclave and maintaining proper operational tolerances necessary for proper operation of the autoclave, such as without limitation spacing to accommodate airflow, tooling, and other apparatus. For example, an autoclave may be formed from a generally "S" shaped tube with a substantially circular cross section. The S-shaped autoclave may be tailored to curing complementary shaped parts that are too large to fit into (or otherwise unsuitable for) standard sized autoclaves, such as complementary shaped parts that measure greater than 30,48 m [100 feet] in length. In further aspects, the disclosed autoclave does not require symmetry between the first portion 104 and the second portion 106. Further, additional portions may be included, and each portion may be separated by a joining portion including a joint.

Returning to FIG. 2A, the conical autoclave 202 further includes attachment surfaces 212 between the joining portion 208 and the first and second conical portion 204, 206. The attachment surfaces 212 may allow different joint portions 208 to be used, thus allowing the conical autoclave 202 to be configured for parts with different geometries (*e.g.* linear or non-linear), such as aircraft wings with different sweep angles $\beta$ In other embodiments, the joining portion 208 may be formed in a partially spherical shape 214 that includes a mating surface at the joint 210. The partially spherical shape may facilitate providing a circular cross-section along the joint 210 as further explained below. Thus, the partially spherical shape 214 may facilitate a rotation of an angle $\phi$ of the first conical portion 204 or second conical portion 206 about the joint 210 in order to change the angle $\beta$ of the conical autoclave 202. In an exemplary configuration, Table 1 includes exemplary data for the angle $\phi$ created by rotating the first conical portion 204 relative the second conical portion 206, creating the angle $\beta$ for the conical autoclave 202. The conical autoclave 202 may also include a brace 540 to prevent changes in the conical autoclave angle $\beta$, such as when the autoclave is in operation and under high pressure. Additional braces may be used to secure the conical autoclave 202 during part processing, such as during the curing of a part.

**Table 1**

| Rotation Angle $\phi$ Relative to Resulting Sweep + Dihedral | |
| --- | --- |
| Conical Portions | Angle $\alpha$ |
| 0° | 35° |
| 45° | 32° |
| 135° | 12.5° |
| 180° | 0° |

FIGS. 3A and 3B are isometric and elevational views of the low volume autoclave 202 in a second position. More specifically, FIG. 3A is a top view of the conical autoclave 202 configured for curing an aircraft wing with a relatively small sweep angle $\delta$, and FIG. 3B is a side elevational view of the conical autoclave 202 in FIG. 3A. Comparison of FIG. 3A with FIG. 2A shows that the angle $\delta$ is substantially less than the angle $\beta$. In some embodiments, the angle $\delta$ may be achieved by replacing the joining portion 208 with another joint portion that creates the angle $\delta$. In other embodiments,

the joining portion 208 may include the joint 210 which may facilitate rotation to change the sweep angle from the angle β shown in FIG. 2A to the angle δ shown in FIG. 3A.

In other embodiments, the autoclave may in a toroidal configuration (*i.e.*, a curved tube). In a toroidal configuration, the large part (e.g., aircraft wing) may be rotated into the toroidal autoclave. In still further embodiments, some or all aspects of the cylindrical, conical, and toroidal autoclaves may be combined to create an autoclave capable of curing large parts without excessive internal volume.

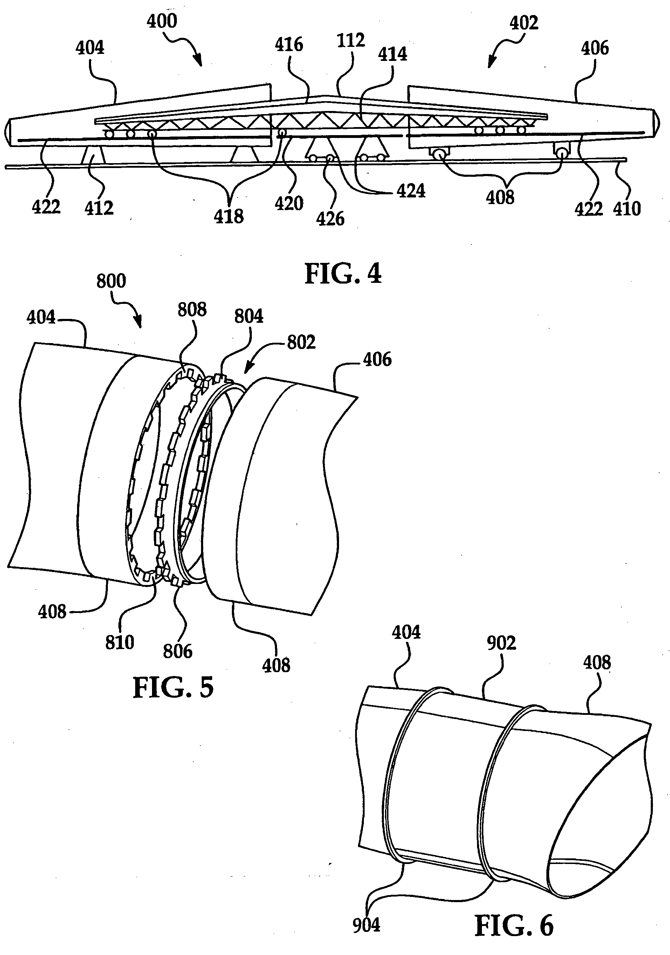

FIG. 4 is a side elevation view of a low volume autoclave, including carts, tools and tracks for positioning the part 112 within the autoclave. An environment 400 includes a conical autoclave 402 with a first conical portion 404 and a second conical portion 406. In some embodiments, either the first conical portion 404 or the second conical portion 406, or both, may be movable by wheels 408 or other motion enabling features. For example, the second conical portion 406 may be movable along a stationary track 410 configured to guide the wheels 408, and thus the second conical portion 406, toward the first conical portion 404. Additionally, either the first conical portion 404 or the second conical portion 406 may be stationary, such as being secured on legs 412. In an exemplary embodiment, the second conical portion 406 may include wheels accepted by a complementary track while the first conical portion 404 may be stationary and supported by the legs 412. In operation, the conical autoclave 402 may be opened to expose the interior and either load or remove the part 112 by first rolling the second conical portion 406 away from the first conical portion 404. Conversely, the autoclave may be closed by reversing the above operation.

In addition, the environment 400 may include a jig 414 to support a tool 416. The tool 416 may be used in the autoclave to support the uncured part 112 during a curing process, such as an uncured aircraft wing formed from fiber-reinforced composite material. The jig may include jig wheels 418 or other motion enabling features. The jig wheels 418 may traverse an elevated track 420 and autoclave tracks 422, or other substantially planar surface, to move the jig 414. The elevated track 420 may be supported by carts 424. Similar to the jig 414, the carts 424 may include cart wheels 426 that may be used to traverse the stationary (or non-stationary) track 410. In some embodiments, more than one stationary track 410 may be used to move the jig 414 and the first conical portion 404. Similarly, more than one elevated track 420 may be used in the environment 400.

FIG. 5 is an exploded isometric view of an exemplary locking mechanism 802 for a low volume autoclave. More specifically, an environment 800 includes a locking mechanism 802 that securely joins the first conical portion 404 to the second conical portion 406 when the conical autoclave 402 is in the closed configuration. In this embodiment, the locking mechanism 802 includes a first cog 804 with first cog teeth 806 that may engage a second cog 808 with second cog teeth 810. The first and second cog teeth 806, 810 have slots with the same pitch as the teeth, thus allowing the teeth from the first cog 804 to be inserted through the second cog 808.

In operation, the first cog 804 and the second cog 808 may engage each other when the first conical portion 404 and the second conical portion 406 are mated, and with the first cog teeth 806 aligned with the slots formed between the second cog teeth 810. Either the first cog 804 or the second cog 808 may be rotated to align the first cog teeth 806 and the second cog teeth 810, thus tightly securing the conical autoclave 402 in the closed position. For example and without limitation, the first cog may be rotatably connected to the joining portion 208 of the second conical portion 406, and thus rotate into a secure position by either manual or mechanical rotation. In other instances, the rollers 708 may provide the rotation necessary to engage the first cog teeth 806 with the second cog teeth 810 in a secure position. Other features, including locking and tightening features, gaskets, lips, bumps, flanges, or the like may be included in the locking mechanism 802 to create a tight and secure connection between the first and second conical portion 404, 406, thus facilitating the autoclave to maintain high temperatures and high pressures during operation.

FIG. 6 is an isometric view of an exemplary cylindrical insert for a low volume autoclave. More specifically, in this embodiment, an environment 900 includes an insert 902 that is configured to be used to extend the length of the autoclave or otherwise modify the internal cavity of the conical autoclave 402. For example, the part 112 may be cured within the conical autoclave 402 when the insert 902 is attached to flanges 904 between the first conical portion 404 (or any other conical portion) and the joining portion 208.

Attention is now directed to FIG. 7 which illustrates another embodiment of a low volume, configurable autoclave 530 that has been configured to process an irregularly shaped, generally curved part (not shown). The part is typically placed on a set of tooling (not shown) defining a tooling envelope 542 indicated by the broken line 544. The autoclave 530 comprises a plurality of autoclave portions 532 wherein adjacent ones of the portions 532 are coupled with each other for axial rotation by a joint 534. As shown in FIG. 8, the joint 534 allows relative axial rotation of adjacent portions 532 to allow reconfiguration of the shape of the autoclave 530 to substantially match the tooling envelope 542 of any of a plurality of differently shaped parts (not shown). The joint 534 may comprise, for example and without limitation, a joint of the type shown in FIG. 5 which includes a locking mechanism 802 having interlocking cogs 804, 808 and cog teeth 806, 810. As previously described the locking mechanism 802 locks adjacent ones of the autoclave portions 532 in any of a plurality of axial positions and forms an air tight seal between the autoclave portion 532 when the autoclave 530 is pressurized.

The part (not shown) positioned within the tooling envelope 542 has a cross section with a maximum dimension 546. The tooling envelope 542 may be inwardly tapered, away from the maximum dimension 546, as shown by the arrows 548. As previously discussed, the low volume configurable auto-cleave 530 has interior surfaces (not shown) that generally complementary to the combination of the part and the tooling envelope 542 but are slightly spaced from the tooling envelope 542 and the exterior contour of the part to allow movement of air during the pressurization process, a well as expansion of the tooling and the part during processing. The extremities of the autoclave 530 (see bases 538 of the respective portions 532 in FIG. 7) may include integrated end caps or covers 536 in order to form a complete, air tight enclosure surrounding tooling envelope 542. The rotatable joints 534 allow one or more of the autoclave portions 532 to be rotated in order to change the shape of the internal volume of the autoclave 530 to accommodate differently shaped parts. Moreover, one or more autoclave portions 532 may be added to or removed from the autoclave 530 in order to reconfigure the autoclave 530 to accommodate differently shaped parts.

In some embodiments, a brace 540, which may comprise a flexible or rigid member, may be connected at or near the extremities of the autoclave 530 in order to prevent movement of the autoclave portions 532 during pressurization. The use of one or more braces 540 may allow the autoclave portions 532 to be fabricated of thinner and/or lighter materials. In other embodiments, the brace 540 may not extend across the entire length of the autoclave 540, but instead may extend across only a portion of one or more bows formed by the autoclave portions 532.

FIG. 9 illustrates an autoclave 530a having a shape that is achieved by reconfiguring the autoclave portions 532 of the autoclave 530 shown in FIG. 7. Reconfiguration of the autoclave 530 shown in FIG. 7 is achieved by rotating the autoclave portions 532 about joints 534 until the internal volume of the autoclave 530a is shaped to substantially match the tooling envelope 542a corresponding to a part that is shaped differently than that which can be processed during the autoclave 530 shown in FIG. 7. Similar to the embodiment shown in FIG. 7, the cross section of the tooling envelop 542a has a maximum cross sectional dimension 546 and may be tapered in a direction away from the maximum dimension 546, as shown by the arrows 548. In the configuration shown in FIG. 9, the autoclave 530a includes a pair of bows 545 along its length. In order to strengthen the autoclave 530a and resist movement of the autoclave portions 532 during pressurization, a pair of braces 540 are installed on the autoclave 530a, respectively spanning the bows 545.

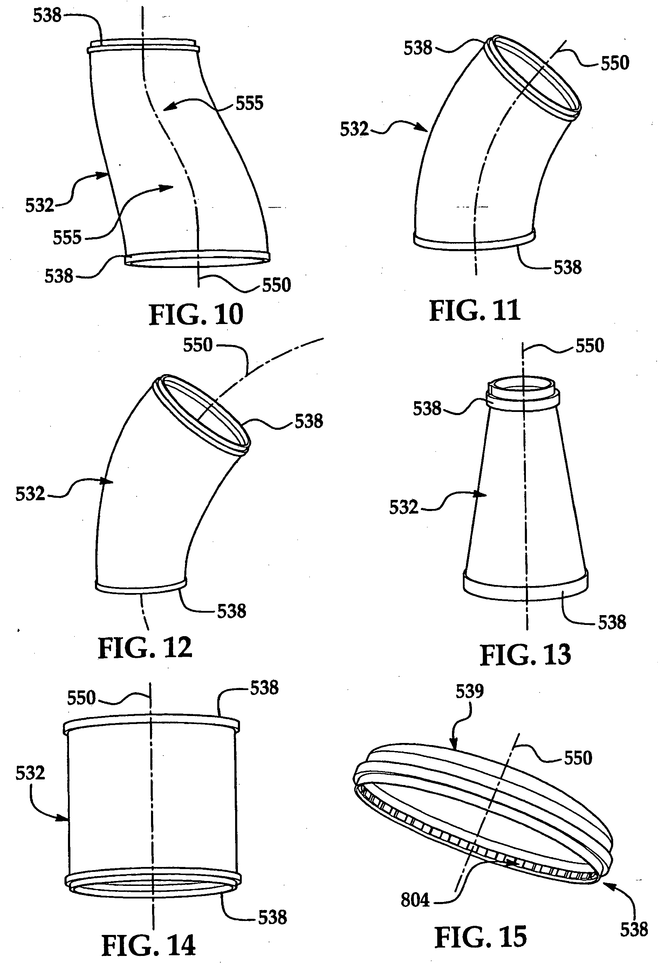

Referring now to FIGS. 10-15, the autoclave portions 532 may have any of a variety of shapes and geometries. For example, FIG. 10 illustrates an autoclave portion having substantially parallel bases 538 with respectively different diameters and a centroid line or central axis 550 that has a pair of curves 555. FIG. 11 illustrates a torus shaped autoclave portion 532 having a curved central axis 550 and non-parallel bases 538 that are substantially the same diameter. In FIG. 11, the central axis 550 is a circumferential arc with a constant radius. FIG. 12 illustrates an autoclave portion 532 similar to that shown in FIG. 11 but wherein the bases 538 have differing diameters. The central axis 550 is a circumferential arc while the radius 562 varies. FIG. 13 illustrates a frusto-conical shaped autoclave portion 532 having substantially parallel bases 538 with differing diameters and a substantially straight central axis 550.

FIG. 14 illustrates a straight cylinder portion 532 having substantially parallel bases 538 of the same diameter and a central axis 550. FIG. 15 illustrates an autoclave door 539 having a single base 538 equipped with cogs 804 which form part of a locking mechanism used to attach the door 539 to the base 538 of one of the autoclave portions 532. Although not shown in FIG. 15, the door 539 may have additional depth along its central axis 550 so that it forms a volume that surrounds part of the part being processed.

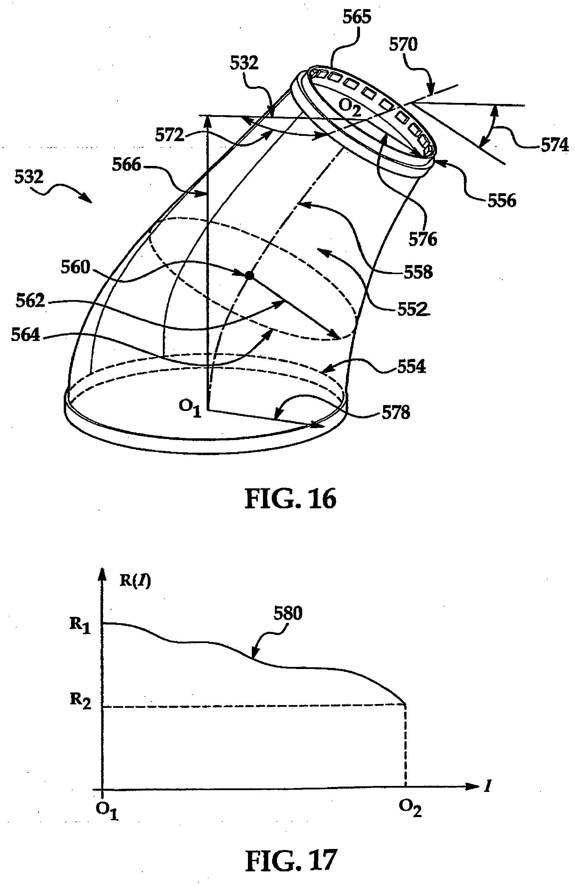

FIG. 16 illustrates an idealized neutral skin 552 of an arbitrary autoclave portion 532 useful in describing guidelines for designing the shape and features of autoclave portions 532 that allow reconfiguration of the disclosed autoclave 530 (FIG. 7). For simplicity of description, the thickness of the autoclave 530 will be ignored and the skin 552 is intended to represent the configurable shape of the internal volume of the autoclave 530.

The autoclave portion 532 shown in FIG. 16 has at least one and no more than two circular bases 554, 556 respectively having centers $O_1$, $O_2$. Each base 554, 556 may be provided with a locking mechanism 565 similar to that previously described which locks the autoclave portion 532 in a desired rotational relationship to an adjacent portion 532. The center $O_2$ of the base 556 may be offset a distance shown by line 568 from a line 566 extending through center $O_1$ and substantially normal to the base 554. Line 568 is parallel to base 554. A line 570 passing through the center $O_2$ of base 556 is inclined at an angle 572 relative to line 568 in a plane that is parallel to base 554. The numeral 574 indicates the angle of inclination of base 556 relative to line 570. Because of the offset between the bases 554, defined by the length of line 568, the central axis or centroid line 554 passing through centers $O_1$, $O_2$ is curved. The central axis 558 is substantially normal to at least one of the bases 554, 556. At any point 560 along the central axis 558, a cross section 564 through the autoclave portion 532 is a circle in a plane substantially normal to the central axis 558 at point 560. The cross section 564 has a radius 562 and the neutral surface 556 of the autoclave portion 532 is formed by a plurality of circular cross sections along the central axis 558.

Referring now to FIG. 17, the radius 562 shown in FIG. 16 and represented as R(1) in FIG. 17, may decrease monotonously, moving along the central axis 558 from the center $O_1$ of base 554 to the center $O_2$ of base 556. The curve 580 represents the change in radius from $R_1$ to $R_2$ at two arbitrary points along the central axis 558, as point 560 shown in FIG. 16 moves from $O_1$ to $O_2$. In addition to the requirement that the radius 562 decreases monotonously from center $O_1$ to center $O_2$, the radius of curvature (not shown) of the central axis 558 may not be less than the value of the radius 562 at any point along the central axis 558.

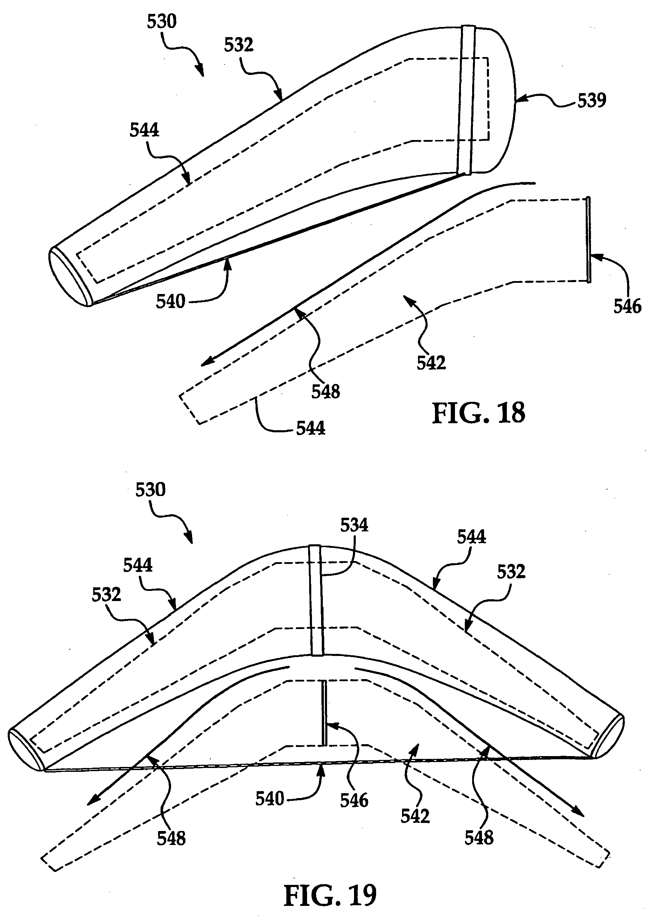

FIG. 18 illustrates an autoclave 530 having a single autoclave portion 532 and an autoclave door 539 shaped to accommodate a tooling envelope 542 generally having the shape of an aircraft wing box or an aircraft wing panel (not shown). The tooling envelope 542 for the aircraft wing box or panel has a maximum cross section dimension 546 and tapers in the direction shown by arrow 548. The autoclave portion 530 may be strengthened against movement or deformation by the use of a brace 540 connected between the opposite ends of the autoclave portion 530.

FIG. 19 illustrates a low volume, configurable autoclave 530 that may be used to cure a part such as a single piece aircraft wing box (not shown) airplane single piece wing panel (not shown) or horizontal stabilizer (not shown) having a geometry that lies within the tooling envelope 542. The maximum cross sectional dimension of the tooling envelop 542 is shown at 546. The autoclave 530 comprises two autoclave portions 532 that are substantially symmetrical and are connected by a central joint 534 of the type previously described which allows curing parts with varying angles of sweep with or without a non-swept center section (not shown).

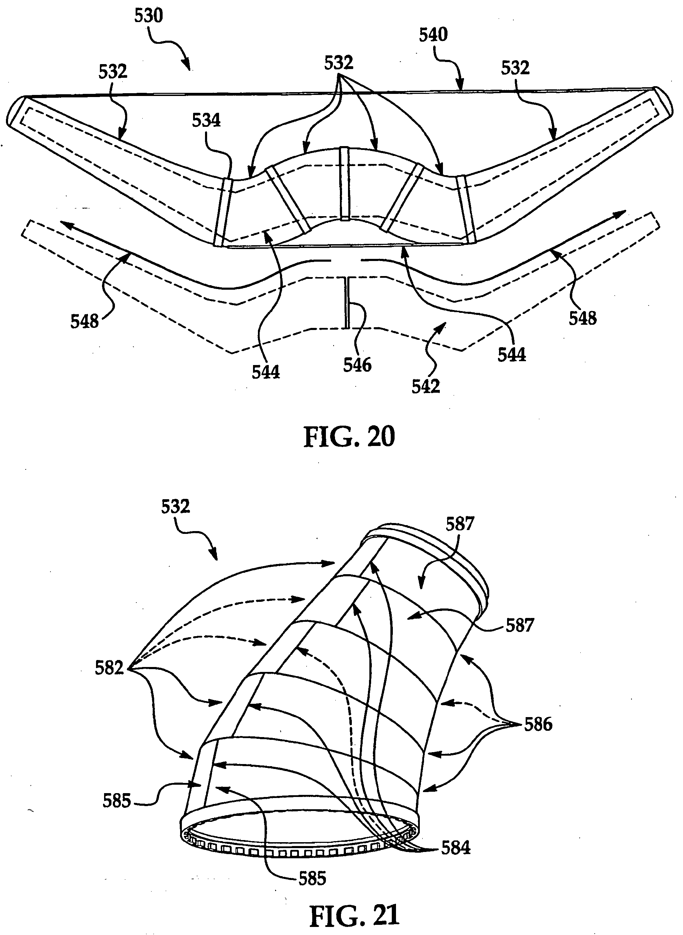

FIG. 20 illustrates a low volume, configurable autoclave 530 comprises six autoclave portions 532 connected together by joints 534 that may be used to cure a single piece aircraft multi-swept wing box or airplane single piece multi-swept wing panel as well as other similarly shaped parts. The autoclave configuration shown in FIG. 20 allows curing of parts that have various positive and negative sweep angles and is substantially symmetrical relative to the center of the tooling envelope which has a maximum cross sectional dimension 546.

Attention is now directed to FIG. 21 which illustrates additional details of one technique for fabricating any of the autoclave portions 532 previously described. The autoclave portion 532 may comprise a plurality of metal plates 582 rolled to shape from flat metal. The opposite edges 585 of each plate 582 are joined together by any suitable technique, such as, without limitation, welding them along seams 584. The circumferential edges 587 of adjacent plates 582 are joined to each other by any suitable means such as welding along seams 584. In the illustrated example, each of the rolled metal plates 582 is slightly frustro-conical in shape.

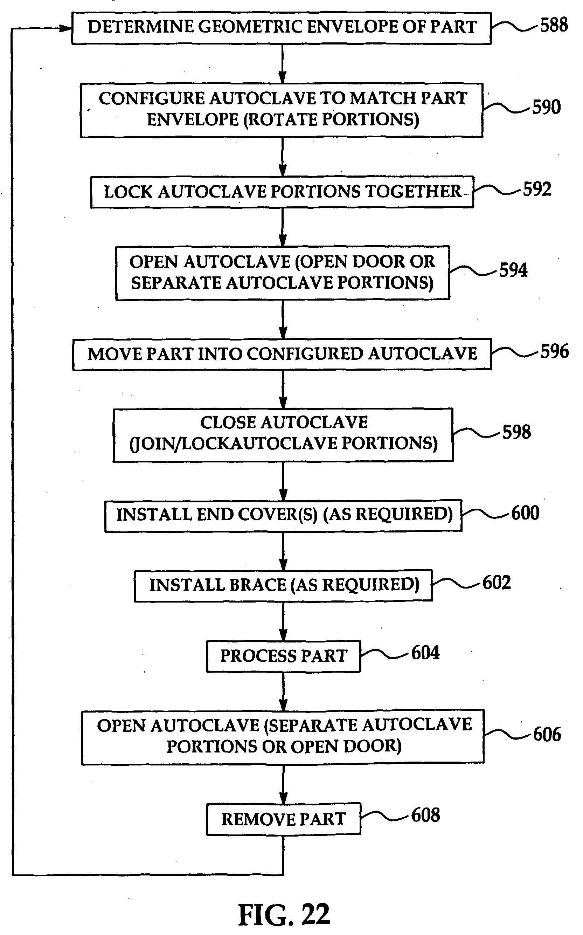

Attention is now directed to FIG. 22 which broadly illustrates the steps of a method of autoclaving parts using the low volume, configurable autoclave 530 discussed previously. Beginning at 588, the geometric envelope of a part (not shown) is determined using any suitable technique, including CAD (computer aided drawing) files or part measurements. Next, at 590, the autoclave 530 is configured to substantially match the part envelope, including associated tooling on which the part is placed. Configuring of the autoclave at 590 may include rotation of one or more of the autoclave portions 532 to achieve the desired shape of the internal volume of the autoclave 530.

Having generally configured the autoclave 530, next, at 592 the autoclave portions 532 are joined and locked together using the previously described locking mechanism 802, following which the autoclave 530 is opened at 594, either by opening an autoclave door 539 or separating one or more of the autoclave portions 532. Next, at 596, the part to be cured is moved into the configured autoclave 530, and at 598 the autoclave 530 is closed by rejoining the autoclave portions and/or installing or closing a door 539 on the autoclave 530. At 600, additional end caps 536 may be installed as required, if not already integrated into the portions 532 at the opposite extremities of the autoclave 530. At 602, one or more braces 540 may be attached to portions 532 of the autoclave 530. It should be noted here that the autoclave portions may be installed together around the part using other sequences that are suited to the size and shape of the part being processed. A 604, the part may be processed within the autoclave 530 at suitable pressures and elevated temperatures. Following curing, at 606, the autoclave may be opened by separating one or more of the autoclave portions 532, or opening a door 539, following which, the part may be removed at 608. The autoclave 530 may then be reconfigured to process one or more parts of different shapes by repeating steps 588-608, during which autoclave portions 532 may be added to or removed from the autoclave 530.

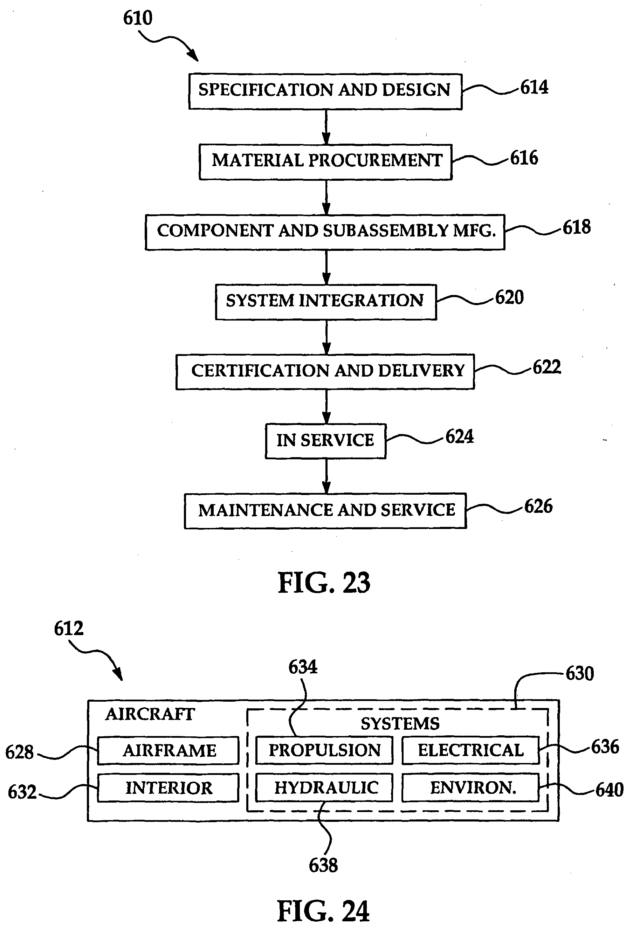

Referring next to FIGS. 23 and 24, embodiments of the disclosure may be used in the context of an aircraft manufacturing and service method 610 as shown in FIG. 23 and an aircraft 612 as shown in FIG. 24. During pre-production, exemplary method 610 may include specification and design 614 of the aircraft 610 and material procurement 616. During production, component and subassembly manufacturing 618 and system integration 620 of the aircraft 612 takes place. During step 618, the disclosed method and apparatus may be employed to fabricate composite parts such as wings, wing boxes, stabilizers, and fuselages to name only a few, which are then assembled at step 620. Thereafter, the aircraft 612 may go through certification and delivery 622 in order to be placed in service 624. While in service by a customer, the aircraft 612 may be scheduled for routine maintenance and service 626 (which may also include modification, reconfiguration, refurbishment, and so on).

Each of the processes of method 610 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 24, the aircraft 612 produced by exemplary method 610 may include an airframe 628 with a plurality of systems 630 and an interior 632. The disclosed method and apparatus may be employed to fabricate wings, wing boxes, stabilizers, fuselages and other arbitrarily shaped parts and families of parts which form part of the airframe 628 or other structural sections of the aircraft 612. Examples of high-level systems 630 include one or more of a propulsion system 634, an electrical system 636, a hydraulic system 638 and an environmental system 640. Any number of other systems may be included. Although an aircraft example is shown, the disclosed embodiments may be employed to fabricate structures used in other flight vehicles including manned or unmanned military aircraft, rotary wing aircraft, or ballistic flight vehicles. The disclosed embodiments may also be employed to fabricate structures used in other vehicles and vessels, including those used in marine and land-based vehicles.

The apparatus embodied herein may be employed during any one or more of the stages of the production and service method 610. For example, components or subassemblies corresponding to production process 618 may be fabricated or manufactured in a manner similar to components or subassemblies produced while the aircraft 612 is in service. Also, one or more apparatus embodiments may be utilized during the production stages 618 and 620, for example, by substantially expediting assembly of or reducing the cost of an aircraft 612. Similarly, one or more apparatus embodiments may be utilized while the aircraft 612 is in service, for example and without limitation, to maintenance and service 626.

The following clauses further describe aspects of the invention:

1. A pressure vessel with a first portion and a second portion, the first and second portions each having a sealed end and a circumferential joint to join the first and second portions, the portions defining an interior configured for accepting a part, the joint being configured to create an angle between the portions and further creating an opening with a seal, the opening facilitating an insertion of the part into the interior, and the seal enabling pressurization of the interior.

2. The pressure vessel of clause 1, wherein the first portion and the second portion are conical portions with bases of the conical portions joined by the circumferential joint.

3. The pressure vessel of clause 1, wherein the circumferential joint is configured to provide a variable angle between the first and second portions.

4. The pressure vessel of clause 1, further including a tubular insert between the first portion and the circumferential joint for extending the cavity.

5. The pressure vessel of clause 1, wherein the part is a single piece composite wing skin including at least one of a sweep angle and a dihedral angle.

6. The pressure vessel of clause 1, wherein the circumferential joint is substantially in the middle of the autoclave.

7. A low volume autoclave, comprising:

a pressure vessel having a joint between a first portion with a longitudinal axis and a second portion with a longitudinal axis, the first portion and the second portion each defining a portion of an internal cavity for accepting a part, the joint creating an angle between the longitudinal axis of the first portion and the second portion, the joint having a seal to facilitate increased pressure and heat within the pressure vessel when configured in a closed position; and
a transport system for movably opening and closing the pressure vessel by separating the first portion from the second portion at the joint, the transport system configured to insert and remove the part from the cavity.

8. The autoclave of clause 7, wherein the joint includes a first cog with mating teeth that engage a second cog with complementary slots to facilitate locking the first portion to the second portion when the autoclave is in the closed position.

9. The autoclave of clause 7, further comprising a spherical joining portion that includes the joint, the joint having a circular profile that facilitates rotation of one of the substantially conical pressure vessel portions to adjust an angle defined by longitudinal axes of the first portion and the second portion.

10. An autoclave for processing differently shaped, elongate parts, comprising:

a first autoclave portion;
a second autoclave portion axially rotatable relative to the second portion; and

a locking mechanism for locking the first and second portions together in any of a plurality of axial rotational positions.

11. The autoclave of clause 10, wherein at least one of the first and second portions includes first and second substantially circular bases and a curved central axis extending between the centers of the bases.

12. The autoclave of clause 10, wherein at least one of the first and second portions includes first and second substantially circular bases and the first base has a diameter larger than that of the second base.

13. The autoclave of clause 11, wherein the center of the first base is laterally offset from the center of the second base along a line extending through the center of and substantially perpendicular to the first base.

14. The autoclave of clause 11, wherein the first and second bases respectively lie in first and second and second differing planes.

15. The autoclave of clause 11, wherein one of the first and second portions includes an end cap forming an air-tight closure on one end of the autoclave.

16. The autoclave of clause 11, wherein at least one of the first and second autoclave portions includes a door through which a part may be inserted into the autoclave.

17. The autoclave of clause 11, wherein the shape of the first autoclave portion is one of:

   a frusto-cone,
   a right cylinder,
   a curved cylinder, and
   a frustum having a curved central axis.

18. An autoclave having a configurable internal volume for processing any of a plurality of differently shaped parts, comprising:

   a plurality of autoclave portions respectively having differing internal volume shapes; and
   a joint between at least certain adjacent ones of the autoclave portions allowing the adjacent portions to rotate relative to each.

19. The autoclave of clause 18, wherein the joint includes a locking mechanism for locking the first and second portions together in any of a plurality of axial rotational positions.

20. The autoclave of clause 18, further comprising:

   a brace coupled between certain of the autoclave potions for securing the autoclave portions against movement relative to each other when the autoclave is pressurized.

21. The autoclave of clause 18, wherein at least one of the portions includes first and second substantially circular bases and a curved central axis extending between the bases, wherein the center of the first base is laterally offset from the center of the second base along a line extending through the center of and substantially perpendicular to the first base.

22. A method of autoclaving differently shaped parts, comprising:

   configuring the shape of the autoclave to accommodate the parts by rotating differently shaped portions of the autoclave relative to each other.

23. The method of clause 22, further comprising:

   opening the autoclave to receive a part by separating at least certain of the autoclave portions;
   placing the part into the open autoclave;
   closing the autoclave by joining the separated autoclave portions; and

locking the autoclave portions into a desired rotational relationship.

24. An autoclave having a reconfigurable low internal volume for processing any of a plurality of differently shaped composite aircraft parts, comprising:

a plurality of autoclave portions respectively having differing internal volume shapes and being axially rotatable relative to each other, wherein at least certain of the portions include first and second substantially circular bases respectively lying in differing planes, and a curved central axis extending between the centers of the bases, and wherein the first base has a diameter larger than the second base, and the center of the first base is laterally offset from the center of the second base along a line extending through the center of and substantially perpendicular to the first base;
joints between adjacent ones of the autoclave portions, each of the joints including a locking mechanism for locking the autoclave portions in any of a plurality rotational positions, the locking mechanism includes a plurality of interlocking cogs on the first and second bases of the autoclave portions; and
a brace coupled between certain of the autoclave potions for securing the autoclave portions against movement relative to each other when the autoclave is pressurized; and
an end cap on at least one of the autoclave portions for forming an air tight closure on one end of the autoclave.

25. A method of autoclaving any of a plurality of differently shaped composite aircraft parts, comprising:

determining the geometric envelope of one of the parts;
configuring the shape of the autoclave to accommodate the part, including rotating differently shaped portions of the autoclave relative to each other;
locking the autoclave portions in a desired rotational relationship with each other, including engaging interlocking cogs on adjacent ones of the autoclave portions;
opening the autoclave to receive the part, including separating certain of the autoclave portions;
placing the part into the open autoclave,
closing the autoclave by joining and locking the separated autoclave portions; and
securing the autoclave portions against movement relative to each other when the autoclave is pressurized by connecting a brace between certain of the autoclave portions.

Although the embodiments of this disclosure have been described with respect to certain exemplary embodiments, it is to be understood that the specific embodiments are for purposes of illustration and not limitation, as other variations will occur to those of skill in the art.

## Claims

1. An autoclave (530) having a configurable internal volume for processing any of a plurality of differently shaped parts (112), comprising:

a plurality of autoclave portions (532) respectively having differing internal volume shapes; and
a joint (534) between at least certain adjacent ones of the autoclave portions (532) allowing the adjacent portions (532) to rotate relative to each,

wherein at least one of the portions (532) includes first and second substantially circular bases (538; 554, 556) and a curved central axis (550; 558) extending between the bases (538; 554, 556), wherein the center of the first base (554) is laterally offset from the center of the second base (556) along a line (566) extending through the center of and substantially perpendicular to the first base (554).

2. The autoclave of claim 1, wherein the joint (534) includes a locking mechanism (565; 802) for locking the portions (532) together in any of a plurality of axial rotational positions.

3. The autoclave of claim 1 or 2, further comprising:

a brace (540) coupled between certain of the autoclave portions (532) for securing the autoclave portions (532) against movement relative to each other when the autoclave (530) is pressurized.

4. The autoclave (530) of claim 1, wherein the autoclave (530) is configured to process any of a plurality of differently shaped composite aircraft parts (112), wherein the plurality of autoclave portions (532) are axially rotatable relative to each other, the first and second substantially circular bases (538; 554, 556) respectively lying in differing planes, the curved central axis (550; 558) extending between the centers of the bases (538; 554, 556), and wherein the first base (554) has a diameter larger than the second base (556);

wherein the autoclave (530) comprises a plurality of joints (534) between adjacent ones of the autoclave portions (532), each of the joints (534) including a locking mechanism (565; 802) for locking the autoclave portions (532) in any of a plurality rotational positions, the locking mechanism (565; 802) includes a plurality of interlocking cogs (804, 808) on the first and second bases (538; 554, 556) of the autoclave portions. (532);

wherein the autoclave (530) comprises a brace (540) coupled between certain of the autoclave portions (532) for securing the autoclave portions (532) against movement relative to each other when the autoclave (530) is pressurized; and

wherein the autoclave (530) comprises an end cap (536) on at least one of the autoclave portions (532) for forming an air tight closure on one end of the autoclave (530).

5. A method of autoclaving differently shaped parts (112) using an autoclave according to any one of claims 1 to 4, comprising:

configuring (590) the shape of the autoclave (530) to accommodate the parts (112) by rotating differently shaped portions (532) of the autoclave (520) relative to each other.

6. The method of claim 5, further comprising:

opening (594) the autoclave (530) to receive a part (112) by separating at least certain of the autoclave portions (532);
placing (596) the part (112) into the open autoclave (530);
closing (598) the autoclave (530) by joining the separated autoclave portions (532); and
locking (598) the autoclave portions (532) into a desired rotational relationship.

7. The method of claim 5, adapted for autoclaving any of a plurality of differently shaped composite aircraft parts (112), the method further comprising:

determining (588) the geometric envelope of one of the parts (112);
configuring (590) the shape of the autoclave (530) to accommodate the part (112), including rotating the differently shaped portions (532) of the autoclave (530) relative to each other;
locking (592) the autoclave portions (532) in a desired rotational relationship with each other, including engaging interlocking cogs (804; 808) on adjacent ones of the autoclave portions (532);
opening (594) the autoclave (530) to receive the part (112), including separating certain of the autoclave portions (532);
placing (596) the part (112) into the open autoclave (530),
closing (598) the autoclave (530) by joining and locking the separated autoclave portions (532); and
securing (602) the autoclave portions (532) against movement relative to each other when the autoclave (530) is pressurized by connecting a brace (540) between certain of the autoclave portions (532).

**Patentansprüche**

1. Autoklav (530) mit einem konfigurierbaren Innenvolumen, und zwar zum Verarbeiten von irgendeinem einer Vielzahl von unterschiedlich geformten Teilen (112), mit:

einer Vielzahl von Autoklavabschnitten (532), die jeweils unterschiedliche Innenvolumenformen haben;
einem Gelenk bzw. einer Verbindung (534) zwischen wenigstens gewissen benachbarten Autoklavabschnitten der Autoklavabschnitte (532), wobei es das Gelenk ermöglicht, dass die benachbarten Abschnitte (532) sich relativ zueinander drehen können,

wobei wenigstens einer der Abschnitte (532) eine erste und eine zweite im Wesentlichen kreisförmige Basis (538; 554, 556) und eine gekrümmte Zentralachse (550; 558) aufweist, die sich zwischen den Basen (538; 554, 556) erstreckt, wobei die Mitte der ersten Basis (554) lateral gegenüber der Mitte der zweiten Basis (556) versetzt ist, und zwar entlang bzw. in Bezug auf eine Linie (566) die sich durch die Mitte der ersten Basis (554) erstreckt und im Wesentlichen senkrecht hierzu ist.

2. Autoklav nach Anspruch 1, wobei das Gelenk (534) einen Verriegelungsmechanismus (565; 802) zum Verriegeln der Abschnitte (532) miteinander in irgendeiner einer Vielzahl von axialen Rotationspositionen beinhaltet.

3. Autoklav nach Anspruch 1 oder 2, ferner mit:

einer Klammer bzw. Strebe (540), die zwischen gewissen Autoklavabschnitten der Autoklavabschnitte (532) gekoppelt ist, und zwar zum Festlegen der Autoklavabschnitte (532) gegenüber einer Bewegung relativ zueinander, wenn der Autoklav (530) unter Druck gesetzt wird.

4. Autoklav (530) nach Anspruch 1, wobei der Autoklav (530) dazu konfiguriert ist, irgendeines einer Vielzahl von unterschiedlich geformten Luftfahrzeugverbundteilen (112) zu verarbeiten, wobei die Vielzahl von Autoklavabschnitten (532) axial relativ zueinander drehbar sind, wobei die erste und die zweite im Wesentlichen kreisförmige Basis (538; 554, 556) jeweils in unterschiedlichen Ebenen liegen, wobei die gekrümmte zentrale Achse (550; 558) sich zwischen den Mitten der Basen (538; 554, 556) erstreckt und wobei die erste Basis (554) einen Durchmesser aufweist, der größer ist als ein Durchmesser der zweiten Basis (556); wobei der Autoklav (530) eine Vielzahl von Gelenken (534) zwischen benachbarten Autoklavabschnitten der Autoklavabschnitte (532) aufweist, wobei jedes der Gelenke (534) einen Verriegelungsmechanismus (565; 802) zum Verriegeln der Autoklavabschnitte (532) in irgendeiner einer Vielzahl von Drehpositionen aufweist, wobei der Verriegelungsmechanismus (565; 802) eine Vielzahl von Verriegelungszähnen (804, 808) an der ersten und der zweiten Basis (538; 554, 556) der Autoklavabschnitte (532) aufweist; wobei der Autoklav (530) eine Klammer (540) aufweist, die zwischen gewissen Autoklavabschnitten der Autoklavabschnitte (532) gekoppelt ist, und zwar zum Festlegen der Autoklavabschnitte (532) gegenüber einer relativen Bewegung zueinander, wenn der Autoklav (530) unter Druck gesetzt wird; und wobei der Autoklav (530) eine Endkappe (536) auf wenigstens einem der Autoklavabschnitte (532) aufweist, und zwar zum Bilden eines luftdichten Verschlusses an einem Ende des Autoklaven (530).

5. Verfahren zum Autoklavieren von unterschiedlich geformten Teilen (112) unter Verwendung eines Autoklav gemäß einem der Ansprüche 1-4, mit:

Konfigurieren (590) der Form des Autoklaven (530) zur Aufnahme der Teile (112), und zwar indem unterschiedlich geformte Abschnitte (532) des Autoklaven (520) relativ zueinander gedreht werden.

6. Verfahren nach Anspruch 5, ferner mit:

Öffnen (594) des Autoklaven (530), um ein Teil (112) entgegenzunehmen, indem wenigstens gewisse Autoklavabschnitte der Autoklavabschnitte (532) voneinander getrennt werden;
Setzen (596) des Teils (112) in den offenen Autoklaven (530);
Schließen (598) des Autoklaven (530) durch Verbinden der voneinander getrennten Autoklavabschnitte (532); und
Verriegeln (598) der Autoklavabschnitte (532) in einer gewünschten Drehbeziehung.

7. Verfahren nach Anspruch 5, ausgelegt zum Autoklavieren von irgendeinem einer Vielzahl von unterschiedlich geformten Luftfahrzeugverbundteilen (112), wobei das Verfahren ferner aufweist:

Bestimmen (588) der geometrischen Hüllkurve von einem der Teile (112);
Konfigurieren (590) der Form des Autoklaven (530), um das Teil (112) aufzunehmen, einschließlich eines Verdrehens der unterschiedlich geformten Abschnitte (532) des Autoklaven (530) relativ zueinander;
Verriegeln (592) der Autoklavabschnitte (532) in einer gewünschten Drehbeziehung zueinander, einschließlich des Eingreifens von Verriegelungszähnen (804; 808) an benachbarten Autoklavabschnitten der Autoklavabschnitte (532);
Öffnen (594) des Autoklaven (530), um das Teil (112) entgegenzunehmen, einschließlich eines Trennens von gewissen Autoklavabschnitten der Autoklavabschnitte (532);
Setzen (596) des Teils (112) in den offenen Autoklaven (530),
Schließen (598) des Autoklaven (530), indem die voneinander getrennten Autoklavabschnitte (532) miteinander verbunden und verriegelt werden; und

13

Festlegen (602) der Autoklavabschnitte (532) gegen eine Bewegung relativ zueinander, wenn der Autoklav (530) unter Druck gesetzt wird, und zwar durch Verbinden einer Klammer (540) zwischen gewissen Autoklavabschnitten der Autoklavabschnitte (532).

**Revendications**

1. Autoclave (530) doté d'un volume interne configurable pour traiter une pièce quelconque parmi une pluralité de pièces (112) de formes différentes, comportant :

   une pluralité de parties (532) d'autoclave présentant respectivement différentes formes de volume interne ; et une jonction (534) entre au moins certaines parties adjacentes parmi les parties (532) d'autoclave permettant aux parties adjacentes (532) de pivoter les unes par rapport aux autres, au moins une des parties (532) comprenant des première et deuxième bases (538; 554, 556) sensiblement circulaires et un axe central incurvé (550 ; 558) s'étendant entre les bases (538 ; 554, 556), le centre de la première base (554) étant latéralement décalé par rapport au centre de la deuxième base (556) suivant une ligne (566) passant par le centre de et sensiblement perpendiculaire à la première base (554).

2. Autoclave selon la revendication 1, la jonction (534) comprenant un mécanisme (565 ; 802) de verrouillage servant à verrouiller les parties (532) ensemble dans une position quelconque parmi une pluralité de positions angulaires axiales.

3. Autoclave selon la revendication 1 ou 2, comportant en outre :

   un tirant (540) couplé entre certaines des parties (532) d'autoclave pour immobiliser les parties (532) d'autoclave contre un mouvement les unes par rapport aux autres lorsque l'autoclave (530) est pressurisé.

4. Autoclave (530) selon la revendication 1, l'autoclave (530) étant configuré pour traiter une pièce quelconque parmi une pluralité de pièces (112) d'avion en composite de formes différentes, la pluralité de parties (532) d'autoclave pouvant pivoter axialement les unes par rapport aux autres, les première et deuxième bases (538 ; 554, 556) sensiblement circulaires se trouvant respectivement dans des plans différents, l'axe central incurvé (550 ; 558) s'étendant entre les centres des bases (538 ; 554, 556), et la première base (554) présentant un diamètre supérieur à celui de la deuxième base (556) ;
   l'autoclave (530) comportant une pluralité de jonctions (534) entre des parties adjacentes (532) d'autoclave, chacune des jonctions (534) comprenant un mécanisme (565 ; 802) de verrouillage servant à verrouiller les parties (532) d'autoclave dans une position quelconque parmi une pluralité de positions angulaires, le mécanisme (565 ; 802) de verrouillage comprenant une pluralité de créneaux imbriqués (804, 808) sur les première et deuxième bases (538 ; 554, 556) des parties (532) d'autoclave ;
   l'autoclave (530) comportant un tirant (540) couplé entre certaines des parties (532) d'autoclave pour immobiliser les parties (532) d'autoclave contre un mouvement les unes par rapport aux autres lorsque l'autoclave (530) est pressurisé ; et
   l'autoclave (530) comportant un bouchon (536) d'extrémité sur au moins une des parties (532) d'autoclave pour former une fermeture étanche à l'air sur une extrémité de l'autoclave (530).

5. Procédé d'autoclavage de pièces (112) de formes différentes à l'aide d'un autoclave selon l'une quelconque des revendications 1 à 4, comportant l'étape consistant à :

   configurer (590) la forme de l'autoclave (530) pour loger les pièces (112) en faisant pivoter des parties (532) de formes différentes de l'autoclave (520) les unes par rapport aux autres.

6. Procédé selon la revendication 5, comportant en outre les étapes consistant à : ouvrir (594) l'autoclave (530) pour recevoir une pièce (112) en séparant au moins certaines des parties (532) d'autoclave :

   placer (596) la pièce (112) dans l'autoclave (530) ouvert ;
   fermer (598) l'autoclave (530) en joignant les parties (532) d'autoclave séparées ; et
   verrouiller (598) les parties (532) d'autoclave dans une relation angulaire souhaitée.

7. Procédé selon la revendication 5, prévu pour autoclaver une pièce quelconque parmi une pluralité de pièces (112) d'avion en composite de formes différentes, le procédé comportant en outre les étapes consistant à :

déterminer (588) l'enveloppe géométrique de l'une des pièces (112) ;

configurer (590) la forme de l'autoclave (530) pour loger la pièce (112), ce qui comprend un pivotement des parties de formes différentes (532) de l'autoclave (530) les unes par rapport aux autres ;

verrouiller (592) les parties (532) d'autoclave dans une relation angulaire souhaitée entre elles, ce qui comprend l'enclenchement de créneaux imbriqués (804 ; 808) sur des parties adjacentes parmi les parties (532) d'autoclave ;

ouvrir (594) l'autoclave (530) pour recevoir la pièce (112), ce qui comprend la séparation de certaines des parties (532) d'autoclave ;

placer (596) la pièce (112) dans l'autoclave (530) ouvert,

fermer (598) l'autoclave (530) en joignant et en verrouillant les parties (532) d'autoclave séparées ; et

immobiliser (602) les parties (532) d'autoclave contre un mouvement les unes par rapport aux autres lorsque l'autoclave (530) est pressurisé en raccordant un tirant (540) entre certaines des parties (532) d'autoclave.

FIG. 1A

FIG. 1B

FIG. 2A

FIG. 2B

FIG. 3A

FIG. 3B

FIG. 4

FIG. 5

FIG. 6

**FIG. 7**

**FIG. 8**

**FIG. 9**

FIG. 10

FIG. 11

FIG. 12

FIG. 13

FIG. 14

FIG. 15

**FIG. 16**

**FIG. 17**

**FIG. 18**

**FIG. 19**

**FIG. 20**

**FIG. 21**

DETERMINE GEOMETRIC ENVELOPE OF PART —588

CONFIGURE AUTOCLAVE TO MATCH PART ENVELOPE (ROTATE PORTIONS) —590

LOCK AUTOCLAVE PORTIONS TOGETHER —592

OPEN AUTOCLAVE (OPEN DOOR OR SEPARATE AUTOCLAVE PORTIONS) —594

MOVE PART INTO CONFIGURED AUTOCLAVE —596

CLOSE AUTOCLAVE (JOIN/LOCK AUTOCLAVE PORTIONS) —598

INSTALL END COVER(S) (AS REQUIRED) —600

INSTALL BRACE (AS REQUIRED) —602

PROCESS PART —604

OPEN AUTOCLAVE (SEPARATE AUTOCLAVE PORTIONS OR OPEN DOOR) —606

REMOVE PART —608

FIG. 22

610

SPECIFICATION AND DESIGN — 614

↓

MATERIAL PROCUREMENT — 616

↓

COMPONENT AND SUBASSEMBLY MFG. — 618

↓

SYSTEM INTEGRATION — 620

↓

CERTIFICATION AND DELIVERY — 622

↓

IN SERVICE — 624

↓

MAINTENANCE AND SERVICE — 626

## FIG. 23

612

634    630

| AIRCRAFT | SYSTEMS | |
|---|---|---|
| AIRFRAME — 628 | PROPULSION — 634 | ELECTRICAL — 636 |
| INTERIOR — 632 | HYDRAULIC — 638 | ENVIRON. — 640 |

## FIG. 24

**EP 2 492 076 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008154602 A1